# EUROPÄISCHE PATENTANMELDUNG

(11) **EP 1 795 391 A1**
(43) Veröffentlichungstag der Anmeldung: **13.06.2007**
(21) Anmeldenummer: 05026955.4
(22) Anmeldetag: 09.12.2005
(51) Int. Cl.: B60K 23/08, B60K 17/346, F16D 25/12

(54) **Hydraulische Schaltvorrichtung und Verfahren zur Ansteuerung von Kupplungen eines Drehmomentmanagementsystems eines mehrachsgetriebenen Fahrzeugs**

(71) Anmelder: Borgwarner, Inc., Auburn Hills, MI 48326-2872 (US)
(72) Erfinder: Ebinger, Günter, 76684 Östringen (DE)
(74) Vertreter: Patentanwälte Westphal, Mussgnug & Partner

(57) **Zusammenfassung**

Hydraulische Schaltvorrichtung zur Ansteuerung von Kupplungen eines Drehmomentmanagementsystems eines mehrachsgetriebenen Fahrzeuges mit einer ersten Kupplung (11), die eine Drehmomentverteileinrichtung darstellt, mittels welcher ein von einem Antriebsmotor (3) eines Fahrzeugs erzeugtes Drehmoment auf verschiedene Achsen des Fahrzeugs (1) verteilbar ist, einer mit einem Druckspeicher (24) verbindbaren Hydropumpe (22), einem Elektromotor (20), mit welchem die Hydropumpe (22) antreibbar ist, und einem Druckspeicher (24), welcher über ein erstes drosselndes Wegeventil (30) mit einem Aktuator (26) der ersten Kupplung (11) verbindbar ist, sowie ein Verfahren zur Ansteuerung von Kupplungen (11, 13) eines Drehmomentmanagementsystems eines mehrachsgetriebenen Fahrzeugs (1).

## Beschreibung

Die Erfindung betrifft eine hydraulische Schaltvorrichtung gemäß dem Oberbegriff des Anspruchs 1 sowie ein Verfahren zur Ansteuerung von Kupplungen eines Drehmomentmanagementsystems eines wenigstens zeitweisen mehrachsgetriebenen Fahrzeugs gemäß dem Oberbegriff des Anspruchs 15.

Die meisten heute eingesetzten Fahrzeuge, und dabei vor allem Kraftfahrzeuge, werden lediglich über eine Achse angetrieben. Seit längerem ist zwar bekannt, dass sich der Antrieb, die Stabilität und somit auch die Sicherheit eines Fahrzeugs insbesondere in kritischen Fahrsituationen oder auf problematischem Untergrund verbessern lässt, indem mehrere Achsen angetrieben werden, doch kommt dies auf Grund teurer Technologie und einem Kraftstoffmehrverbrauch gegenüber einem einachsgetriebenem Fahrzeug vergleichsweise selten zum Einsatz.

Bereits in der DE 36 21 225 C1 wird daher ein Zwischenweg vorgeschlagen, bei welchem bei einem zweiachsigen Fahrzeug mit einer permanent angetriebenen Hinterachse nur bei Bedarf ein definierter Teil des Antriebsmomentes auf die nicht permanent angetriebene zweite Achse übertragen wird. Das Zu- und Abschalten des zusätzlichen Achsantriebs erfolgt dabei mit Hilfe einer Kupplung. Weiterhin ist beispielsweise aus der DE 202 12 094 U1 der Einsatz von Längsdifferentialgetrieben, Viskosekupplungen, Torsen-Differentialgetrieben oder schlupfgeregelten Reibungskupplungen (Haldex®-Kupplungen) bekannt. Eine Haldex®-Kupplung ist dabei so aufgebaut, dass die Kupplung betätigt wird, indem eine Pumpe bei Bedarf einen Druck aufbaut, mit welchem ein Aktuator der Kupplung beaufschlagt wird, so dass die Kupplung schließt.

Des Weiteren ist aus der US 6,631,779 B2 ein Allradantriebsystem bekannt, bei welchem sich ein zusätzlicher Achsantrieb dosiert zuschalten lässt. Die Zuschaltung erfolgt hierbei durch eine elektromagnetisch gesteuerte und über einen Elektromotor angetriebene Kupplung.

Der Erfindung liegt nun das Problem zu Grunde, eine aufwandsgünstige, platzsparende und schnellagierende Schaltvorrichtung gemäß dem Oberbegriff des Anspruchs 1 zur Verfügung zu stellen, mit welcher eine Drehmomentverteilung zwischen Achsen eines mehrachsgetriebenen Fahrzeugs präzise und stufenlos realisierbar ist.

Dieses Problem wird erfindungsgemäß gelöst durch eine gattungsgemäße hydraulische Schaltvorrichtung mit den kennzeichnenden Merkmalen des Anspruchs 1.

Vorteilhafte Weiterbildungen sind Gegenstand abhängiger Unteransprüche.

Weiterhin liegt der Erfindung das Problem zu Grunde, ein Verfahren gemäß dem Oberbegriff des Anspruchs 15 zur Verfügung zu stellen, mit welchem einfach Kupplungen eines Drehmomentmanagementsystems eines wenigstens zeitweise mehrachsgetriebenen Fahrzeugs angesteuert werden können.

Dieses Problem wird erfindungsgemäß gelöst durch ein gattungsgemäßes Verfahren mit den kennzeichnenden Verfahrensschritten des Anspruchs 15.

Vorteilhafte Weiterbildungen sind wiederum Gegenstand abhängiger Unteransprüche.

Der der Erfindung zu Grunde liegende Gedanke besteht darin, bei einer hydraulischen Schaltvorrichtung mit einer ersten Kupplung, die eine Drehmomentverteileinrichtung darstellt, mittels welcher ein von einem Antriebsmotor eines Fahrzeugs erzeugtes Drehmoment auf verschiedene Achsen des Fahrzeugs verteilbar ist, und mit einer mit einem Druckspeicher verbindbaren Hydropumpe einen Elektromotor vorzusehen, mit welchem die Hydropumpe antreibbar ist, sowie ein erstes drosselndes Wegeventil, über welches der Druckspeicher mit einem Aktuator der ersten Kupplung verbindbar ist.

Auf diese Weise wird eine schnellagierende Schaltvorrichtung zur Verfügung gestellt, da der Druck nicht erst bei Bedarf aufgebaut zu werden braucht, sondern bereits auf Grund des vorhandenen Druckspeichers zur Verfügung steht. Mithilfe des drosselnden Wegeventils lässt sich dabei der Schließgrad der ersten Kupplung und somit die Drehmomentverteilung zwischen den Achsen stufenlos und genau dosiert steuern. Überdies ist eine entsprechende Schaltvorrichtung aufwandsgünstig herzustellen, da die Komponenten seit langem bekannt, bewährt, zuverlässig und kostengünstig sind. Darüber hinaus nimmt eine derartige hydraulische Schaltvorrichtung einen geringeren Anteil des in Fahrzeugen üblicherweise beschränkt zur Verfügung stehenden Raumes ein.

Ein weiterer Grundgedanke der Erfindung besteht darin, zur Ansteuerung von Kupplungen eines Drehmomentmanagementsystems eines wenigstens zeitweise mehrachsgetriebenen Fahrzeugs einen Druckspeicher zu laden, ein von einem Antriebsmotor des Fahrzeugs zur Verfügung gestelltes Drehmoment auf verschiedene Achsen mittels einer ersten Kupplung zu verteilen und zur Verteilung des Drehmoments den Schließgrad der ersten Kupplung mit einem ersten drosselnden Wegeventil zu steuern, über welches ein Aktuator der ersten Kupplung mit dem Druckspeicher verbunden werden kann.

Eine Weiterbildung der erfindungsgemäßen hydraulischen Schaltvorrichtung sieht vor, ein zweites drosselndes Wegeventil vorzusehen, über welches der Druckspeicher mit einem Aktuator einer zweiten Kupplung verbindbar ist, mit welcher der Schlupf zwischen zwei Abschnitten einer Achse steuerbar ist.

Selbstverständlich können auch in weiteren Achsen zusätzliche drosselnde Wegeventile vorgesehen sein, über welche derselbe oder ein weiterer Druckspeicher mit Aktuatoren zugehöriger Kupplungen verbindbar sind, mit welchen der Schlupf zwischen Abschnitten dieser jeweiligen Achsen steuerbar ist, so dass auch an diesen Achsen eine Drehmomentverteilung auf verschiedene Räder der Achse realisierbar ist.

Dies trägt dem Umstand Rechnung, dass sich die Fahrstabilität eines Fahrzeuges weiter verbessern lässt, indem die Drehmomentverteilung zwischen den Rädern einer Achse einstellbar ist. Dies ist über die Steuerung des Schlupfes zwischen entsprechenden Achsabschnitten realisierbar. Infolge ergibt sich für das Fahrzeug eine bessere Traktion, insbesondere wenn die Räder einer Achse auf unterschiedlichem Untergrund stehen. Weiterhin wird die Kontrolle und die Fahrstabilität verbessert.

Bei der beschriebenen Weiterbildung wird dies erreicht, ohne ein zusätzliches Antriebsaggregat, wie eine Pumpe oder einen elektrischen Stellmotor oder ähnliches, vorzusehen, indem der Aktuator der zweiten Kupplung mit dem bereits vorhandenen Druckspeicher über ein weiteres drosselndes Wegeventil verbindbar ist. Infolge ergibt sich für dieses verbesserte System eine besonders aufwandsgünstige und platzsparende Ausgestaltung. Überdies handelt es sich bei den eingesetzten Bauteilen um seit langem erprobte und zuverlässige Bauteile, welche einen zuverlässigen Betrieb ermöglichen.

In einer bevorzugten Ausgestaltungsvariante ist die zweite Kupplung zwischen zwei Ausgängen eines Differentialgetriebes oder zwischen einem Ausgang und einem Gehäuse des Differentialgetriebes angeordnet. Auf diese Weise kann das Drehmoment variabel zwischen den Achsen verteilt werden. Darüber hinaus besteht die Möglichkeit einer regelbaren Drehmomentverteilung zwischen den Rädern einer Achse. Dies ermöglicht letztlich die Verbesserung der fahrdynamischen Eigenschaften sowie der Sicherheit eines Fahrzeugs.

In einer vorteilhaften Weiterbildung der Erfindung ist wenigstens eines der drosselnden Wegeventile als Magnetventil mit veränderbarer Stellkraft (variable force solenoid) ausgeführt, wobei dieses wiederum als Druckregelventil oder als Stromregelventil ausgeführt sein kann. Derartige Ventile arbeiten besonders präzise und schnell, so dass sich der Schließgrad der Kupplung und infolge die Drehmomentverteilung in besonders präziser Weise steuern lässt.

In einer bevorzugten Ausgestaltungsvariante sind die drosselnden Wegeventile als 3/2-Wegeventile ausgeführt. Dies erlaubt eine möglichst direkte Ansteuerung der Aktuatoren der ersten und zweiten Kupplungen. Derartige Ventile arbeiten präzise und dynamisch, was eine komfortable und/oder sportliche Fahrweise ermöglicht. Zudem sind derartige Hydraulikventile relativ einfach in enge und zerklüftete Bauräume integrierbar und stellen überdies gegenüber mechanischen Lösungen mit Stellmotoren die aufwandsgünstigere Lösung dar.

In einer vorteilhaften Ausgestaltungsvariante der Erfindung ist zwischen dem Druckspeicher und der Hydropumpe ein in Richtung auf die Hydropumpe zu schließendes Rückschlagventil angeordnet. Dieses Rückschlagventil ermöglicht es, wenn der Druckspeicher geladen ist, die Hydropumpe bzw. den sie antreibenden Elektromotor einfach abzuschalten, ohne dass ein Ventil anzusteuern wäre, um den Rückfluss eines Druckmittels in die Hydropumpe oder in ein mit dieser verbundenes Reservoir zu verhindern. Der in dem Druckspeicher vorhandene Druck schließt stattdessen besagtes Rückschlagventil, ohne dass Steuereingriffe notwendig sind. Vorzugsweise ist das genannte Rückschlagventil federbelastet, so dass der am Ausgang der Hydropumpe zur Verfügung stehende Druck zunächst den am Druckspeicher anliegenden Druck um einen gewissen Betrag übersteigen muss, eher das Rückschlagventil öffnet und der Druckspeicher geladen werden kann. Dieser gewisse Betrag wird dabei durch die Rückstellkraft der belastenden Feder bestimmt. Hierdurch wird ein häufiges Öffnen und Schließen des Rückschlagventils auf Grund von Druckschwankungen oder Aus- und Anlaufprozessen der Hydropumpe unterbunden.

Eine Weiterbildung der Erfindung sieht eine Steuereinheit vor, mittels welcher wenigstens ein drosselndes Wegeventil ansteuerbar ist. Hierdurch kann eine zentrale Ansteuerung der Wegeventile erfolgen, was insbesondere von Vorteil ist, wenn mehrere drosselnde Wegeventile vorgesehen sind, da in diesem Falle die Steuerung der verschiedenen drosselnden Wegeventile aufeinander abgestimmt werden kann. Vorzugsweise ist die Steuereinheit als elektro-hydraulische Steuereinheit ausgeführt. Im Übrigen weist die Steuereinheit vorteilhafterweise einen Mikroprozessor auf.

In einer vorteilhaften Ausgestaltungsvariante der Erfindung ist in wenigstens einer ein drosselndes Wegeventil mit einem Aktuator verbindenden Druckleitung ein Drucksensor angeordnet, dessen Messdaten der Steuereinheit zuführbar sind. Über diesen Druck lässt sich der Schließgrad der zugehörigen Kupplung in der Steuereinheit bestimmen, so dass die aktuelle Drehmomentverteilung berechenbar und in die Bestimmung der von der Steuereinheit auszugebenden Steuersignale einbeziehbar ist, was eine präzisere Ansteuerung ermöglicht.

Alternativ oder zusätzlich zu diesen Drucksensoren sieht eine weitere Ausgestaltungsvariante der Erfindung vor, wenigstens einen Aktuator mit einem Weglängensensor zu versehen, dessen Messdaten der Steuereinheit zuführbar sind. Mittels diesem Sensor lässt sich wiederum der Schließgrad der Kupplung und somit die Drehmomentverteilung an der jeweiligen Kupplung bestimmen, so dass auch hier eine präzisere Ansteuerung möglich ist.

Bei einer Weiterbildung der Erfindung ist ein Füllstandsensor für den Druckspeicher vorgesehen. Hierdurch lässt sich der Beladezustand des Druckspeichers bestimmen. Bei einer vorteilhaften Ausgestaltung der Erfindung sind die Messdaten des Füllstandsensors der Steuereinrichtung zuführbar und der Elektromotor ist mittels der Steuereinrichtung ansteuerbar. Auf diese Weise kann über die Steuereinrichtung bestimmt werden, wann die Hydropumpe mit dem Elektromotor anzutreiben und der Druckspeicher zu beladen ist. Der Betrieb des Elektromotors und der Hydropumpe kann somit über die Steuereinrichtung gesteuert werden.

In einer alternativen Ausgestaltungsvariante sind hingegen die Messdaten des Füllstandsensors einem oberen und unteren Grenzschalten zuführbar, mit welchem die Spannungsversorgung des Elektromotors schaltbar ist. In diesem Fall schaltet der Grenzschalter bei Bedarf den die Hydropumpe antreibenden Elektromotor ein, so dass der Druckspeicher geladen werden kann. Bei beiden Ausgestaltungsvarianten wird der Elektromotor bei ausreichend geladenem Druckspeicher abgeschaltet, so dass ein unnötiger Energieverbrauch unterbunden ist.

In einer Weiterbildung der Erfindung ist zwischen der Hydropumpe und dem Druckspeicher ein drittes Wegeventil vorgesehen, über welches die Hydropumpe mit dem Druckspeicher oder mit einem Kupplungskühlkreis verbindbar ist. Auf diese Weise kann zu denjenigen Zeiten, in welchen der Druckspeicher ausreichend geladen ist, über dieses dritte Wegeventil ein Kupplungskühlkreis von der Hydropumpe mit einem Druck- bzw. Kühlmittel versorgt werden. Hierbei wird in an sich bekannter Weise das Druckmittel zur Kühlung der Kupplungen des Drehmomentmanagementsystems durch diese hindurchgeleitet. Auf Grund dieser Weiterbildung ist dies möglich, ohne dass hierfür ein gesondertes Druck- oder Kühlmittelreservoir sowie eine gesonderte Hydropumpe samt zugehörigem Antrieb vorzusehen ist. Infolge ergibt sich ein kompaktes, platzsparendes sowie aufwandsgünstiges System, welches neben der Ansteuerung der Kupplungen des Drehmomentmanagementsystems gleichzeitig deren Kühlung realisiert.

Das genannte dritte Wegeventil ist bevorzugt als elektromagnetisch betätigtes Ventil mit Rückholfeder oder in besonders bevorzugter Weise als druckbetätigtes Ventil mit Rückholfeder ausgeführt. Im ersten Fall kann das dritte Wegeventil beispielsweise über die Steuereinheit angesteuert werden, welche anhand des Füllzustandes des Druckspeichers bestimmt, ob dieser zu laden ist oder nicht. Falls nicht, wird das dritte Wegeventil derartig betätigt, dass über die Hydropumpe der Kupplungskreis versorgt wird.

In der Ausführung des druckbetätigten Ventils besteht die Möglichkeit, diese Druckbetätigung durch den am Druckspeicher vorherrschenden Druck zu realisieren. Die Schaltvorrichtung ist sodann bevorzugt derart ausgelegt, dass bei geladenem Druckspeicher der dort vorherrschende Druck ausreicht, um das dritte Wegeventil zu betätigen, wobei der Druckspeicher von der Hydropumpe abgetrennt und diese mit dem Kupplungskühlkreis verbunden wird. Fällt infolge von Steuervorgängen an den Kupplungen der Druck am Druckspeicher ab, bewirkt die Rückholfeder die Öffnung des dritten Wegeventils in Richtung des Druckspeichers und die Abkopplung des Kupplungskühlkreises.

Eine Weiterbildung des erfindungsgemäßen Verfahrens sieht vor, dass der Schließgrad mindestens einer zweiten Kupplung, welche den Schlupf zwischen zwei Abschnitten einer Achse bestimmt, mit einem zweiten drosselnden Wegeventil gesteuert wird, über welches ein Aktuator der zweiten Kupplung mit dem Druckspeicher verbunden werden kann. Hierdurch kann die Drehmomentverteilung zwischen den Rädern einer Achse gesteuert werden. Wie bereits oben dargelegt wurde, bringt dies Vorteile für die Fahrstabilität, insbesondere eine verbesserte Traktion, und somit eine erhöhte Sicherheit mit sich. Selbstverständlich kann auch der Schließgrad weiterer Kupplungen zusätzlicher Achsen mit zusätzlichen drosselnden Wegeventilen gesteuert werden, so dass auch bei diesen Achsen eine Drehmomentverteilung auf die verschiedenen Räder möglich ist.

Eine bevorzugte Ausgestaltungsvariante des Verfahrens gemäß der Erfindung sieht vor, dass der Druckspeicher nur zeitweise beladen wird und in Zeiten, in welchen der Druckspeicher nicht geladen wird, Druckmittel in einen Kühlkreis für die erste und/oder die zweite Kupplung gepumpt wird. Sind darüber hinaus weitere Kupplungen in dem Drehmomentmanagementsystem vorgesehen, so können auch diese als Bestandteil des Kühlkreises mit Druckmittel versorgt werden. In dieser Weise kann neben der Ansteuerung der Kupplungen des Drehmomentmanagementsystems auch eine Kühlung derselben bewirkt werden, ohne dass hierfür zusätzliche Kühlmittelreservoirs und zugehörige Pumpen vorzusehen wären. Es ist offensichtlich, dass neben den Kupplungen des Drehmomentmanagementsystems auch andere Fahrzeugbauteile als Bestandteil des Kühlkreises mit dem Druckmittel versorgt werden können, welches sodann als Kühlmittel dient.

In einer bevorzugten Ausgestaltungsvariante wird der Druckspeicher geladen, wenn der Füllstand des Druckspeichers unter einen unteren Grenzwert fällt, wobei die Beladung so lange fortgesetzt wird, bis ein oberer Grenzwert erreicht ist. Auf diese Weise wird gewährleistet, dass der Druckspeicher stets einen Mindestdruck zur Ansteuerung der Aktuatoren der Kupplungen zur Verfügung stellt, gleichzeitig aber nicht mit einem zu hohen Druck beaufschlagt wird.

In einer vorteilhaften Ausgestaltungsvariante der Erfindung wird wenigstens ein drosselndes Wegeventil mittels einer Steuereinheit angesteuert. Auf diese Weise lassen sich komplexe Steuervorgänge, insbesondere kombinierte Steuervorgänge an verschiedenen drosselnden Wegeventilen durchführen.

Eine besonders bevorzugte Variante des erfindungsgemäßen Verfahrens sieht daher vor, dass überdies die Beladung des Speichers mittels der Steuereinheit gesteuert wird, so dass keine weitere Steuervorrichtung oder Schaltvorrichtung vorgesehen zu werden braucht.

In einer Weiterbildung des erfindungsgemäßen Verfahrens wird der Schließgrad wenigstens einer Kupplung mittels eines Sensors, vorzugsweise mittels eines Druck- oder Weglängensensors, bestimmt. Auf diese Weise stehen stets Informationen bezüglich des Schließgrades und somit der Drehmomentverteilung an den verschiedenen Kupplungen zur Verfügung.

Die Messdaten wenigstens eines Druck- oder Weglängensensors werden vorteilhafterweise der Steuereinheit zugeführt. Auf diese Weise steht für die Bestimmung der Ansteuersignale für die verschiedenen Kupplungen des Drehmomentmanagementsystems und/oder die Beladung des Druckspeichers stets der aktuelle Schließgrad der Kupplungen bzw. die gegenwärtige Drehmomentverteilung zur Verfügung.

In einer Weiterbildung des erfindungsgemäßen Verfahrens werden der Steuereinheit Messdaten von Fahrzustandssensoren, insbesondere Schlupfsensoren an den Fahrzeugrädern, zugeführt. Als weitere Fahrzustandssensoren kommen unter anderem Quer- oder Längsbeschleunigungssensoren, Neigungssensoren sowie Geschwindigkeitssensoren in Betracht. Hierdurch stehen der Steuereinheit eine Vielzahl von Daten zur Verfügung, anhand deren die zur Stabilisierung des Fahrzustandes notwenigen Eingriffe in die Drehmomentverteilung bestimmt werden können, so dass infolge eine entsprechende Ansteuerung der Kupplungen bzw. drosselnden Wegeventile des Drehmomentmanagementsystems möglich ist.

Zu diesem Zweck sieht eine bevorzugte Ausgestaltungsvariante des erfindungsgemäßen Verfahrens vor, dass mit der Steuereinheit die Messdaten der Druck- oder Weglängensensoren sowie der Fahrzustandssensoren ausgewertet, die für eine Stabilisierung des Fahrzustandes erforderlichen Änderungen der Drehmomentverteilung zwischen den Achsen des Fahrzeugs sowie die erforderlichen Änderungen des Schlupfes zwischen Abschnitten jeweils einer Achse bestimmt und die erforderlichen Änderungen durch entsprechende Ansteuerung der drosselnden Wegeventile vorgenommen werden. Hierdurch lässt sich die Fahrsicherheit erhöhen.

Eine besonders bevorzugte Ausgestaltung des erfindungsgemäßen Verfahrens sieht vor, dass die zur Stabilisierung des Fahrzustandes erforderlichen Änderungen derart bestimmt werden und die entsprechende Ansteuerung der drosselnden Wegeventile so rechtzeitig vorgenommen wird, dass kein Schlupf zwischen Rädern des Fahrzeuges und der Fahrbahn entsteht. Auf diese Weise lässt sich ein präemptives Drehmomentmanagementsystem realisieren. Gegenüber Systemen, welche erst dann einen Eingriff in die Drehmomentverteilung vornehmen, wenn an einem Rad des Fahrzeuges ein Schlupf detektiert wird, hat dies den Vorteil, dass bereits vor Entstehen des Schlupfes der Fahrzustand stabilisiert wird, was eine weitere Erhöhung der Fahrsicherheit mit sich bringt.

Im Folgenden wird die Erfindung anhand von Figuren näher erläutert. Es zeigen:
- Figur 1: Schematische Darstellung eines Antriebsstranges eines zweiachsigen Fahrzeuges mit einer ersten Kupplung zur Verteilung des Drehmoments zwischen den beiden Achsen und einer zweiten Kupplung zur Steuerung des Schlupfes zwischen Achsabschnitten einer Achse gemäß dem Stand der Technik,
- Figur 2: ein erstes Ausführungsbeispiel einer erfindungsgemäßen hydraulischen Schaltvorrichtung,
- Figur 3: ein zweites Ausführungsbeispiel für eine hydraulische Schaltvorrichtung gemäß der Erfindung,
- Figur 4: ein drittes Ausführungsbeispiel einer erfindungsgemäßen hydraulischen Schaltvorrichtung,
- Figur 5: ein viertes Ausführungsbeispiel für eine hydraulische Schaltvorrichtung gemäß der Erfindung.

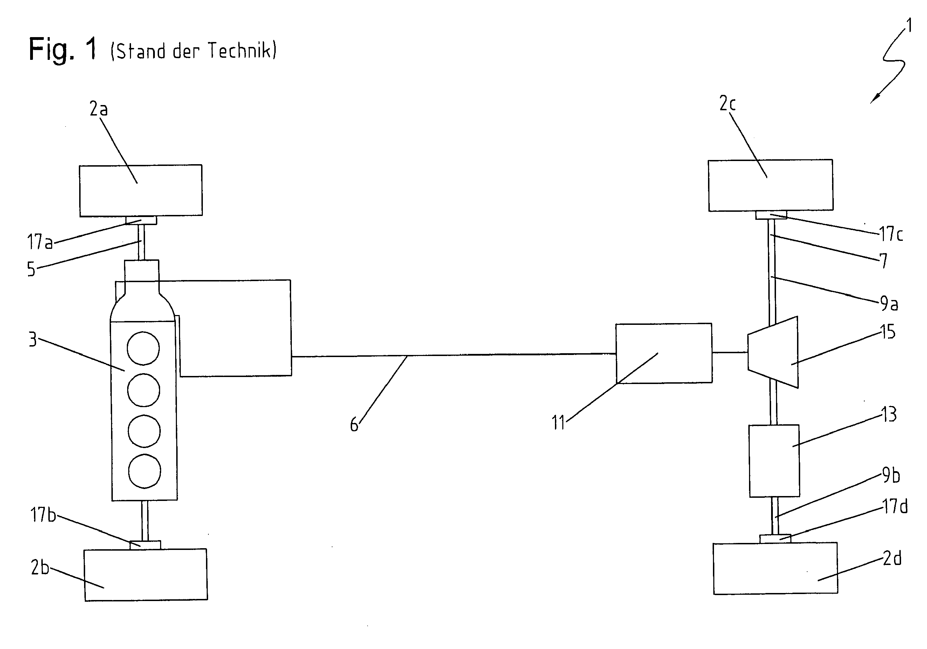

Figur 1 illustriert einen Antriebsstrang eines zweiachsgetriebenen Fahrzeugs 1, wie er aus dem Stand der Technik bekannt ist. Schematisch dargestellt sind die beiden Achsen 5 und 7, wobei über der Achse 5 der Antriebsmotor 3 angeordnet ist.
Dies legt nahe, dass es sich bei der Achse 5 um die Vorderachse handelt. Dies ist jedoch für die Erfindung nicht zwangsweise nötig. Der Antriebsmotor 3 kann sowohl über der Vorder- wie auch der Hinterachse angeordnet sein. Darüber hinaus ist es unerheblich, ob die Vorder- oder die Hinterachse die permanent angetriebene Achse des Fahrzeugs darstellt.

In der Darstellung der Figur 1 handelt es sich bei der Achse 5 um die permanent angetriebene Achse, wobei ein Teil des von dem Antriebsmotor 3 zur Verfügung gestellten Drehmoments über eine Welle 6 auf die Achse 7 übertragbar ist. Zur Steuerung der Verteilung des Drehmoments auf die beiden Achsen 5 und 7 ist mit der Welle 6 eine erste Kupplung 11 verbunden.

Der Abtrieb der ersten Kupplung 11 führt in ein Gehäuse 15 eines einfachen Differentialgetriebes, welches bekanntermaßen einen Ausgleich der Laufstrecken der beiden Fahrzeugräder 2c und 2d der Achse 7 bewerkstelligt.

Weiterhin ist in der Achse 7 eine zweite Kupplung 13 vorgesehen, welche die Achse 7 in die beiden Achsabschnitte 9a und 9b teilt. Mittels dieser zweiten Kupplung 13 ist der Schlupf zwischen den beiden Achsabschnitten 9a und 9b und somit die Drehmomentverteilung zwischen den beiden Fahrzeugrädern 2c und 2d steuerbar.

In jedem der Fahrzeugräder 2a, 2b, 2c, 2d ist jeweils ein Schlupfsensor 17a, 17b, 17c, 17d vorgesehen, welcher einen Fahrzustandssensor darstellt. Mit diesen lässt sich der Schlupf zwischen den Fahrzeugrädern 2a, 2b, 2c, 2d und der sich jeweils darunter befindlichen Fahrbahn bestimmen. Als Schlupfsensoren können beispielsweise vorhandene ABS (Anti-Blockier-System)-Sensoren dienen.

Der beschriebene, aus dem Stand der Technik bekannte Antriebsstrang wird im Folgenden zur Erläuterung der Erfindung herangezogen. Es ist offensichtlich, dass zudem weitere Achsen vorgesehen sein können, von welchen einige oder alle mit einem Drehmoment beaufschlagt werden sollen. Überdies kann selbstverständlich auch innerhalb jeder Achse eine Kupplung nach Art der zweiten Kupplung 13 vorgesehen sein, mit welcher der Schlupf zwischen Abschnitten der Achse regelbar ist. Insbesondere kann die Achse 5 zusätzlich eine solche Kupplung nach Art der zweiten Kupplung 13 aufweisen.

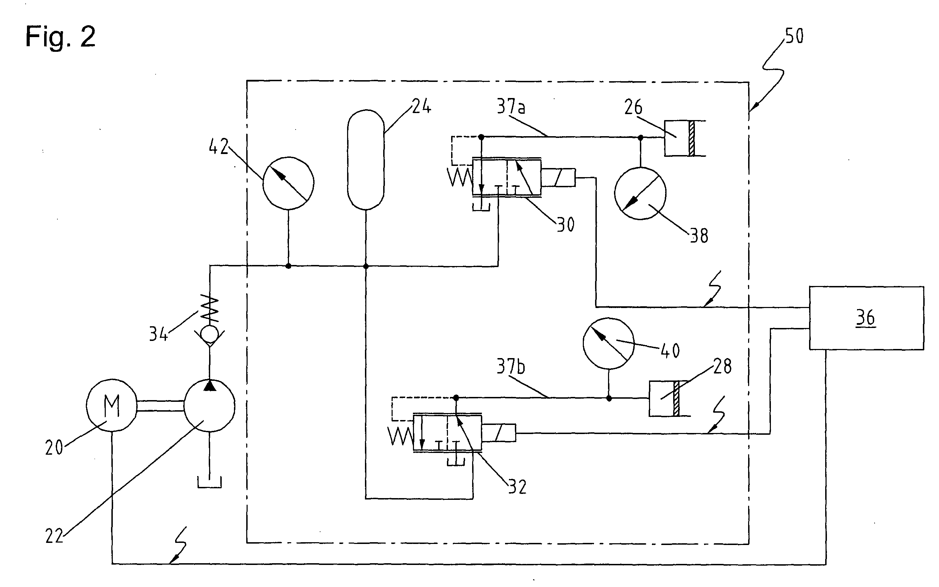

Figur 2 zeigt nun ein erstes Ausführungsbeispiel einer hydraulischen Schaltvorrichtung gemäß der Erfindung. Der Übersichtlichkeit halber ist hierin nur der Aktuator 26 der ersten Kupplung 11 stellvertretend für die erste Kupplung 11 dargestellt. Entsprechend ist stellvertretend für die zweite Kupplung 13 der Aktuator 28 der zweiten Kupplung wiedergegeben.

Wie Figur 2 zeigt, ist in diesem Ausführungsbeispiel eine Hydropumpe 22 vorgesehen, welche über einen Elektromotor 20 antreibbar ist. Die Hydropumpe 22 ist mit einem Druckspeicher 24 verbunden, wobei diese Verbindung zeitweise durch ein federbelastetes Rückschlagventil 34 unterbrochen sein kann.

Der Druckspeicher 24 ist über ein erstes drosselndes Wegeventil 30 mit dem Aktuator 26 der ersten Kupplung 11 verbindbar. Die Ansteuerung des ersten drosselnden Wegeventils 30 erfolgt mittels einer elektro-hydraulischen Steuereinheit 36.

Weiterhin ist der Druckspeicher 24 mit einem zweiten drosselnden Wegeventil 32 verbunden und über dieses mit dem Aktuator 28 der zweiten Kupplung verbindbar. Das zweite drosselnde Wegeventil 32 wird ebenfalls mittels der elektro-hydraulischen Steuereinheit 36 angesteuert. Sowohl das erste wie auch das zweite drosselnde Wegeventil sind als Magnetventile mit veränderbarer Stellkraft ausgeführt, was die oben beschriebene präzise Steuerung der Öffnung der Ventile und somit der Druckbeaufschlagung der Aktuatoren 26 und 28 der ersten und zweiten Kupplung 11 und 13 ermöglichst.

In einer das erste drosselnde Wegeventil mit dem ersten Aktuator 26 verbindenden Druckleitung 37a ist ein Drucksensor 38 vorgesehen. Analog ist in einer das zweite drosselnde Wegeventil 32 mit dem zweiten Aktuator 28 verbindenden Druckleitung 37b ebenfalls ein Drucksensor 40 vorgesehen. Daneben steht ein Drucksensor 42 mit dem Druckspeicher in Verbindung. Alle diese Drucksensoren sind, soweit keine anderweitige Verbindung in den Figuren dargestellt ist, mit der elektro-hydraulischen Steuereinheit 36 über Datenleitungen verbunden, so dass deren Messdaten der elektro-hydraulischen Steuereinheit 36 zuführbar sind. Dasselbe gilt für die Schlupfsensoren 17a, 17b, 17c und 17d aus der Figur 1. Diese Datenleitungen sind zwecks einer übersichtlicheren Darstellung in den Figuren 2 bis 5 nicht wiedergegeben.

Wird nun die Hydropumpe 22 von dem Elektromotor 20 angetrieben und stellt sie einen Ausgangsdruck zur Verfügung, welcher über dem gegenwärtig im Druckspeicher 24 vorhandenen Druck liegt, so öffnet das federbelastete Rückschlagventil 34 und der Druckspeicher 24 wird mit einem Druckmittel geladen. Dabei wird der Füllzustand bzw. der an dem Druckspeicher 24 vorherrschende Druck mittels des Drucksensors 42 überwacht. Anhand der der Steuereinrichtung 36 zugeführten Messdaten des Drucksensors 42 entscheidet diese, ob der Druckspeicher 24 ausreichend geladen ist und schaltet gegebenenfalls über eine dargestellte Steuerleitung den Elektromotor 20 ab, so dass auf Grund des damit verbundenen Druckabfalls an der Hydropumpe 22 das Rückschlagventil 34 schließt. Stellt umgekehrt die Steuereinrichtung 36 anhand der ihr übermittelten Messdaten des Drucksensors 42 fest, dass der Ladezustand des Druckspeichers zu gering ist, so wird die Hydropumpe 22 oder der Elektromotor 20 in Betrieb gesetzt.

Weiterhin bestimmt die Steuereinrichtung 36 mittels eines Mikroprozessors und in ihr hinterlegten Steuerprogrammen auf Basis der ihr zugeführten Messdaten von Fahrzustandssensoren, insbesondere den Schlupfsensoren 17a, 17b, 17c, 17d sowie gegebenenfalls weiterer Zustandssensoren, welche Veränderungen der Drehmomentverteilung erforderlich sind, um einen stabilen Fahrzustand zu gewährleisten. Entsprechend steuert sie die Drehmomentverteilung zwischen der Achse 5 und der Achse 7 durch Ansteuerung des ersten drosselnden Wegeventils 30, welches sodann entsprechend dem anliegenden Steuersignal zu einem gewissen Grad geöffnet wird, so dass der Aktuator 26 mit einem definierten Druck beaufschlagt wird. Infolge wird die erste Kupplung 11 zu einem bestimmten Grad geschlossen, was eine definierte Drehmomentverteilung zwischen der Achse 5 und der Achse 7 mit sich bringt. Die Messdaten des Drucksensors 38 dienen dabei dazu, den aktuellen Schließgrad und somit die aktuelle Drehmomentverteilung vor dem Steuereingriff zu bestimmen, so dass das erforderliche Steuersignal für das zu drosselnde Wegeventil 30 präzise berechenbar ist.

In analoger Weise wird aus den von dem Drucksensor 40 zur Verfügung gestellten Messdaten die aktuelle Drehmomentverteilung zwischen den Achsabschnitten 9a und 9b und somit der Räder 2c und 2d der Achse 7 bestimmt. Ist zur Stabilisierung des Fahrzustandes auch eine Änderung des Schlupfes bzw. der Drehmomentverteilung zwischen den Achsabschnitten 9a und 9b erforderlich, so bestimmt die Steuereinrichtung 36 auf Basis der Messdaten des Druckssensors 40 und Programmvorgaben die erforderliche Änderung des Schlupfes zwischen den Achsabschnitten 9a, 9b und steuert das zweite drosselnde Wegeventil 32 entsprechend an. Infolge dieser Ansteuerung wird die Öffnung bzw. die Drosselung des zweiten drosselnden Wegeventils variiert, so dass der Aktuator 28 der zweiten Kupplung 13 mit einem veränderten Druck beaufschlag wird. Dies hat wiederum eine Veränderung des Schlupfes zwischen den Achsabschnitten 9a und 9b und somit eine Veränderung der Drehmomentverteilung entlang der Achse 7 zur Folge.

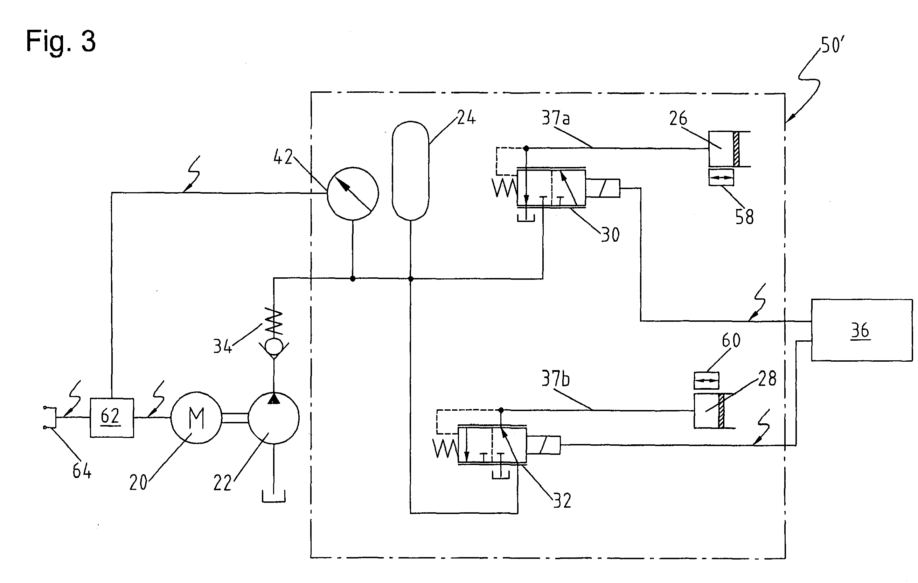

Figur 3 zeigt eine weitere Ausführungsvariante der erfindungsgemäßen Schaltvorrichtung, wobei, wie in allen Darstellungen, gleiche Bezugszeichen stets gleiche Bestandteile bezeichnen.

Gegenüber dem Ausführungsbeispiel aus der Figur 2 unterscheidet sich die Schaltvorrichtung aus Figur 3 dadurch, dass anstelle der Drucksensoren 38 und 40 ein Weglängensensor 58 am Aktuator 26 der ersten Kupplung 11 und ein Weglängensensor 60 am Aktuator 28 der zweiten Kupplung 13 vorgesehen sind. Diese Weglängensensoren 58, 60 dienen demselben Zweck wie die Drucksensoren 38 und 40, nämlich der Bestimmung des aktuellen Schließgrades der ersten Kupplung 11 bzw. der zweiten Kupplung 13. Die Messdaten der Weglängensensoren 58 und 60 werden entsprechend ebenfalls der Steuereinrichtung 36 zugeführt, wobei die entsprechenden Datenleitungen der Übersichtlichkeit halber wiederum nicht dargestellt sind. Die Messdaten der Weglängensensoren 58 und 60 fließen in derselben Weise in die Berechnungen und Steuervorgänge der Steuereinheit 36 ein wie die Messdaten der Drucksensoren 58 und 60 aus Figur 2.

Überdies unterscheidet sich das Ausführungsbeispiel der Figur 3 von dem in der Figur 2 dargestellten dadurch, dass der Elektromotor 20 nunmehr nicht von der Steuereinheit 36 angesteuert wird. Stattdessen ist ein oberer/unterer Grenzschalter 62 vorgesehen. Im Gegensatz zum Ausführungsbeispiel der Figur 2 werden diesem die Messdaten des Drucksensors 42 zugeführt. Ergibt sich aus diesen, dass am Druckspeicher 24 ein Druck unterhalb des unteren Grenzwertes des oberen/unteren Grenzschalters 62 vorherrscht, so verbindet der obere/untere Grenzschalter den Elektromotor elektrisch mit einer Spannungsversorgung 64. Infolge wird die Hydropumpe 22 durch den Elektromotor 20 angetrieben und der Druckspeicher 24 in der oben näher beschriebenen Weise geladen. Steigt der von dem Drucksensor 42 an Druckspeicher 24 gemessene Druck über einen bestimmten Grenzwert, so trennt der obere/untere Grenzschalter 62 den Elektromotor 20 von der Spannungsversorgung 64 ab, der Ladevorgang wird beendet.

Im Ausführungsbeispiel der Figur 3 wird somit die Beladung des Druckspeichers 24 unabhängig von der Steuereinheit 36 bewerkstelligt. Im Übrigen gleicht die hydraulische Schaltungsvorrichtung, abgesehen von den die Drucksensoren 38 und 40 ersetzenden Weglängensensoren 58 und 60, dem Ausführungsbeispiel der Figur 2.

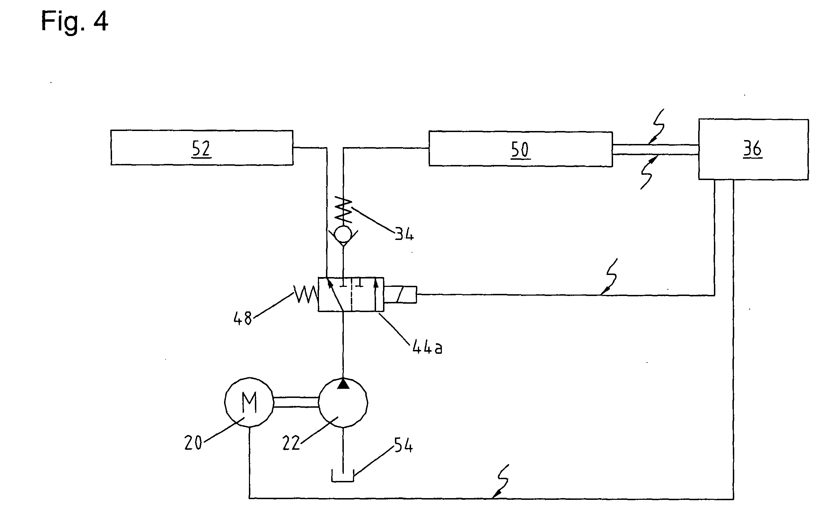

Figur 4 illustriert ein weiteres Ausführungsbeispiel einer erfindungsgemäßen hydraulischen Schaltvorrichtung. Wiederum ist die Hydropumpe 22 vorgesehen, welche über den Elektromotor 20 antreibbar ist. Die Ansteuerung des Elektromotors 20 erfolgt, wie im Zusammenhang mit Figur 2 erläutert, mittels der Steuereinrichtung 36.

Ein bereits aus der Figur 2 bekannter und dort entsprechend gekennzeichneter Kupplungssteuerkreis 50 ist auch Bestandteil der hydraulischen Schaltungsvorrichtung gemäß der Figur 4. Der Kupplungssteuerkreis 50 ist hierin lediglich vereinfacht wiedergegeben.

Von den obigen Ausführungsbeispielen unterscheidet sich die hydraulische Schaltvorrichtung gemäß dem Ausführungsbeispiel der Figur 4 dadurch, dass zwischen der Hydropumpe 22 und dem Druckspeicher 24, welcher Bestandteil des Kupplungssteuerkreises 50 ist, ein drittes Wegeventil 44a, welches in diesem Fall als elektromagnetisches Wegeventil ausgeführt ist, vorgesehen ist. Über dieses dritte Wegeventil 44a ist die Hydropumpe 22 wahlweise mit dem Druckspeicher 24 des Kupplungssteuerkreises 50 verbindbar oder mit einem nur schematisch wiedergegebenen und an sich bekannten Kupplungskühlkreis 52. In diesem Kupplungskühlkreis 52 dient das Druckmittel gleichzeitig als Kühlmittel, welches den Kupplungen 11 und 13 zu deren Kühlung zugeführt wird. Von dort erfolgt nach Aufnahme von Wärmemengen in an sich bekannter Weise die Rückführung des Druckmittels in ein Druckmittelreservoir 54, aus welchem die Hydropumpe 22 das Druckmittel fördert. In einer vorteilhaften Ausgestaltungsvariante erfolgt die Rückführung des Druckmittels in das Druckmittelreservoir 54 ferner über dazwischen geschaltete Kühlvorrichtungen (Öl-Wasser- oder Öl-Luft-Kühlvorrichtungen).

Offenbar können an den Kupplungskühlkreis 52 auch weitere zu kühlende Bauteile angeschlossen sein. Der Druckmittel bzw. Kühlmitteldurchsatz ist dementsprechend anzupassen. Überdies besteht die Möglichkeit, lediglich die erste Kupplung 11 in den Kupplungskühlkreis 52 einzubinden, um diese effizient bzw. mit geringerem Energie- und Druckmitteleinsatz zu kühlen.

Wie Figur 4 zeigt, ist zwischen dem dritten Wegeventil 44a und dem Druckspeicher 24 des Kupplungssteuerkreises 50 noch das federbelastete Rückschlagventil 34 angeordnet, welches die im Zusammenhang mit Figur 3 beschriebenen Funktionen erfüllt. Infolge des zusätzlichen Wegeventils 44a kann jedoch dieses Rückschlagventil 34 in einer besonders aufwandsgünstigen Version der hydraulischen Schaltvorrichtung entfallen, da der Rücklauf von Druckmittel aus dem Kupplungssteuerkreis 50 zur Hydropumpe 22 durch das dritte Wegeventil 44a verhindert wird.

Wie der Figur 4 zu entnehmen ist, wird das dritte Wegeventil durch elektromagnetische Betätigung in diejenige Ventilstellung gebracht, in welcher die Hydropumpe 22 mit dem Druckspeicher 24 verbunden ist. Mittels einer Rückholfeder 48 wird bei Abschalten des Elektromagneten des elektromagnetischen Wegeventils 44a das Ventil hingegen in die Stellung verbracht, in welcher die Hydropumpe 22 mit dem Kupplungskühlkreis 52 verbunden ist. Im unbetätigten Zustand des Wegeventils 44a speist daher die Hydropumpe 22 den Kupplungskühlkreis 52.

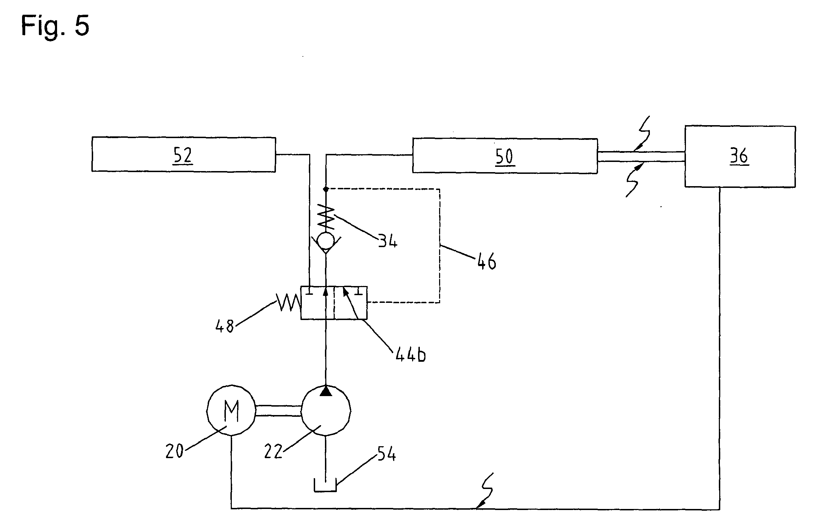

Figur 5 zeigt ein weiteres Ausführungsbeispiel einer erfindungsgemäßen hydraulischen Schaltvorrichtung. Die schematische Darstellung ähnelt stark derjenigen der Figur 4. Anstelle des elektromagnetischen Wegeventils 44a ist in dem Ausführungsbeispiel der Figur 5 jedoch ein druckbetätigtes drittes Wegeventil 44b vorgesehen, welches wiederum mit der Rückholfeder 48 ausgestattet ist.

Zur Druckbetätigung des dritten Wegeventils 44b ist eine Druckbetätigungsleitung 46 vorgesehen, welche das dritte Wegeventil 44 mit demjenigen Druck beaufschlagt, welcher am Druckspeicher 24 des Kupplungssteuerkreises 50 anliegt. Somit liegt am druckbetätigten dritten Wegeventil 44b stets derjenige Druck an, welcher der Drucksensor 42 misst. Gegen die von diesem Druck auf ein Stellglied des Ventils ausgeübte Kraft wirkt die Rückholfeder 48. Im in der Figur 5 dargestellten Ausgangsfall überwiegt somit die Rückstellkraft der Rückholfeder 48 und die Hydropumpe 22 ist mit dem Druckspeicher 24 verbunden. Es erfolgt das Laden des Druckspeichers 24, so dass sich der Druck in der Druckbetätigungsleitung 46 sukzessive erhöht. Ab einem gewissen Druck ist die auf das dritte Wegeventil 44b ausgeübte Kraft ausreichend groß, um die Rückstellkraft der Rückholfeder 48 zu überwinden, und das Ventil wird in die Stellung überführt, an welcher die Hydropumpe 22 anstelle mit dem Druckspeicher 24 mit dem Kupplungskühlkreis 52 verbunden ist. Fällt infolge der Betätigung von Aktuatoren 26, 28 der Kupplungen 11, 13 der Druck im Druckspeicher 24 ab, so kann der Druck in der Druckbetätigungsleitung 46 der Rückstellkraft der Rückholfeder 48 nicht mehr entgegenwirken und das Ventil 44b wird wieder in die Ausgangsstellung überführt, in welcher die Hydropumpe 22 mit dem Druckspeicher 24 verbunden ist.

Im Gegensatz zu dem Ausführungsbeispiel der Figur 4, in welcher das elektromagnetische dritte Wegeventil 44a über eine elektrische Steuerleitung von der Steuereinheit 36 angesteuert wird, ist eine derartige Ansteuerung durch die Steuereinheit 36 im Ausführungsbeispiel der Figur 5 nicht erforderlich. Die Ansteuerung erfolgt in diesem Ausführungsbeispiel hydraulisch über die Druckbetätigungsleitung 46.

Sowohl im Ausführungsbeispiel der Figur 4 als auch im Ausführungsbeispiel der Figur 5 ist der Elektromotor 20, wie im Zusammenhang mit dem Ausführungsbeispiel aus Figur 2 beschrieben, über eine elektrische Steuerleitung mit der Steuereinheit 36 verbunden und wird von dieser angesteuert, insbesondere an- und ausgeschaltet. Dies ist von Vorteil, wenn der Elektromotor 20 und somit die Hydropumpe 22 aus Energiespar- oder Verschleißgründen nicht im Dauerbetrieb arbeiten sollen. In diesen Fällen kann bei zufriedenstellender Kühlung im Kupplungskühlkreis 52 und bei ausreichend vorhandenem Druck im Druckspeicher 24 der Elektromotor abgeschaltet werden. Offensichtlich kann in den Ausführungsbeispielen in den Figuren 4 und 5 jedoch eine Ansteuerung des Elektromotors 20 mittels der Steuereinheit 36 unterbleiben, da diese zur Steuerung des Druckes im Druckspeicher 24 nicht erforderlich ist. Diese Funktion wird hier von den dritten Wegeventilen 44a oder 44b übernommen.

Überdies kann im Ausführungsbeispiel der Figur 5 bei konstant laufender Pumpe 22 der Drucksensor 42, welcher Bestandteil des Kupplungssteuerkreises 50 ist, entfallen, da das Laden des Druckspeichers über das druckbetätigte Wegeventil 44b und die Druckbetätigungsleitung 46 bewirkt wird.

Weiterhin ist offensichtlich, dass anstelle des aus der Figur 2 bekannten Kupplungssteuerkreises 50 in den Ausführungsbeispielen der Figuren 4 und 5 auch der Kupplungssteuerkreis 50', welcher aus der Figur 3 bekannt und in deren Zusammenhang beschrieben wurde, vorgesehen werden kann.

### Bezugszeichenliste

- 1: Fahrzeug
- 2a: Fahrzeugräder
- 2b: Fahrzeugräder
- 2c: Fahrzeugräder
- 2d: Fahrzeugräder
- 3: Antriebsmotor
- 5: Achse
- 6: Welle
- 7: Achse
- 9a: Achsabschnitt
- 9b: Achsabschnitt
- 11: erste Kupplung
- 13: zweite Kupplung
- 15: Gehäuse eines Differentialgetriebes
- 17a: Schlupfsensor
- 17b: Schlupfsensor
- 17c: Schlupfsensor
- 17d: Schlupfsensor
- 20: Elektromotor
- 22: Hydropumpe
- 24: Druckspeicher
- 26: Aktuator der ersten Kupplung
- 28: Aktuator der zweiten Kupplung
- 30: erstes drosselndes Wegeventil
- 32: zweites drosselndes Wegeventil
- 34: federbelastetes Rückschlagventil
- 36: elektro-hydraulische Steuereinheit
- 37a: Druckleitung
- 37b: Druckleitung
- 38: Drucksensor
- 40: Drucksensor
- 42: Drucksensor
- 44a: elektromagnetisches Wegeventil
- 44b: druckbetätigtes Wegeventil
- 46: Druckbetätigungsleitung
- 48: Rückholfeder
- 50: Kupplungssteuerkreis
- 50': Kupplungssteuerkreis
- 52: Kupplungskühlkreis
- 54: Druckmittelreservoir
- 58: Weglängensensor
- 60: Weglängensensor
- 62: oberer/unterer Grenzschalter
- 64: Spannungsversorgung

## Patentansprüche

1. Hydraulische Schaltvorrichtung mit
- einer ersten Kupplung (11), die eine Drehmomentverteileinrichtung darstellt, mittels welcher ein von einem Antriebsmotor (3) eines Fahrzeugs (1) erzeugtes Drehmoment auf verschiedene Achsen (5, 7) des Fahrzeugs (1) verteilbar ist,
- einer mit einem Druckspeicher (24) verbindbaren Hydropumpe (22),
**dadurch gekennzeichnet, dass**
- ein Elektromotor (20) vorgesehen ist, mit welchem die Hydropumpe (22) antreibbar ist,
- der Druckspeicher (24) über ein erstes drosselndes Wegeventil (30) mit einem Aktuator (26) der ersten Kupplung (11) verbindbar ist.

2. Hydraulische Schaltvorrichtung nach Anspruch 1,
**dadurch gekennzeichnet, dass** ein zweites drosselndes Wegeventil (32) vorgesehen ist, über welches der Druckspeicher (24) mit einem Aktuator (28) einer zweiten Kupplung (13) verbindbar ist, mit welcher der Schlupf zwischen zwei Abschnitten (9a, 9b) einer Achse (7) steuerbar ist.

3. Hydraulische Schaltvorrichtung nach Anspruch 2,
**dadurch gekennzeichnet, dass** die zweite Kupplung (13) zwischen zwei Ausgängen eines Differentialgetriebes oder zwischen einem Ausgang und einem Gehäuse (15) des Differentialgetriebes angeordnet ist.

4. Hydraulische Schaltvorrichtung nach einem der Ansprüche 1 bis 3,
**dadurch gekennzeichnet, dass** wenigstens eines der Wegeventile (30, 32) als Magnetventil mit veränderbarer Stellkraft ausgeführt ist.

5. Hydraulische Schaltvorrichtung nach einem der Ansprüche 1 bis 4,
**dadurch gekennzeichnet, dass** die Wegeventile (30, 32) als 3/2-Wegeventile ausgeführt sind.

6. Hydraulische Schaltvorrichtung nach einem der Ansprüche 1 bis 5,
**dadurch gekennzeichnet, dass** zwischen dem Druckspeicher (24) und der Hydropumpe (22) ein in Richtung auf die Hydropumpe (22) zu schließendes Rückschlagventil (34) angeordnet ist, vorzugsweise ein federbelastetes Rückschlagventil (34).

7. Hydraulische Schaltvorrichtung nach einem der Ansprüche 1 bis 6,
**dadurch gekennzeichnet, dass** eine Steuereinheit vorgesehen ist, mittels welcher wenigstens ein drosselndes Wegeventil ansteuerbar ist, vorzugsweise eine elektro-hydraulische Steuereinheit.

8. Hydraulische Schaltvorrichtung nach Anspruch 7,
**dadurch gekennzeichnet, dass** in wenigstens einer ein drosselndes Wegeventil (30, 32) mit einem Aktuator (26, 28) verbindenden Druckleitung (37a, 37b) ein Drucksensor (38, 40) angeordnet ist, dessen Messdaten der Steuereinheit (36) zuführbar sind.

9. Hydraulische Schaltvorrichtung nach Anspruch 7,
**dadurch gekennzeichnet, dass** wenigstens ein Aktuator (26, 28) mit einem Weglängensensor (58, 60) versehen ist, dessen Messdaten der Steuereinheit (36) zuführbar sind.

10. Hydraulische Schaltvorrichtung nach einem der Ansprüche 1 bis 9,
**dadurch gekennzeichnet, dass** für den Druckspeicher (24) ein Füllstandsensor (42), vorzugsweise ein Drucksensor (42), vorgesehen ist.

11. Hydraulische Schaltvorrichtung nach Anspruch 10,
**dadurch gekennzeichnet, dass** die Messdaten des Füllstandssensors einem oberen/unteren Grenzschalter (62) zuführbar sind, mit welchem die Spannungsversorgung (64) des Elektromotors (20) schaltbar ist.

12. Hydraulische Schaltvorrichtung nach Anspruch 10,
**dadurch gekennzeichnet, dass** die Messdaten des Füllstandssensors (42) der Steuereinheit (36) zuführbar sind und der Elektromotor (20) mittels der Steuereinheit (36) ansteuerbar ist.

13. Hydraulische Schaltvorrichtung nach einem der Ansprüche 1 bis 12,
**dadurch gekennzeichnet, dass** zwischen der Hydropumpe (22) und dem Druckspeicher (24) ein drittes Wegeventil (44a; 44b) vorgesehen ist, über welches die Hydropumpe (22) mit dem Druckspeicher (24) oder mit einem Kupplungskühlkreis (52) verbindbar ist.

14. Hydraulische Schaltvorrichtung nach Anspruch 13,
**dadurch gekennzeichnet, dass** das dritte Wegeventil (44a; 44b) als elektromagnetisch betätigtes Ventil (44a) mit Rückholfeder (48) oder druckbetätigtes Ventil (44b) mit Rückholfeder (48) ausgeführt ist.

15. Verfahren zur Ansteuerung von Kupplungen (11, 13) eines Drehmomentmanagementsystems eines wenigstens zeitweise mehrachsgetriebenen Fahrzeugs (1) mit folgenden Verfahrensschritten:
- Laden eines Druckspeichers (24),
- Verteilen eines von einem Antriebsmotor (3) des Fahrzeugs (1) zur Verfügung gestellten Drehmoments auf verschiedene Achsen (5, 7) mittels einer ersten Kupplung,
**dadurch gekennzeichnet, dass** zur Verteilung des Drehmoments der Schließgrad der ersten Kupplung (11) mit einem ersten drosselnden Wegeventil (30) gesteuert wird, über welches ein Aktuator (26) der ersten Kupplung (11) mit dem Druckspeicher (24) verbunden werden kann.

16. Verfahren nach Anspruch 15,
**dadurch gekennzeichnet, dass** der Schließgrad mindestens einer zweiten Kupplung (13), welche den Schlupf zwischen zwei Abschnitten (9a, 9b) einer Achse (7) bestimmt, mit einem zweiten drosselnden Wegeventil (32) gesteuert wird, über welches ein Aktuator (28) der zweiten Kupplung (13) mit dem Druckspeicher verbunden werden kann.

17. Verfahren nach einem der Ansprüche 15 bis 16,
**dadurch gekennzeichnet, dass** der Druckspeicher (24) nur zeitweise geladen wird und in Zeiten, in welchen der Druckspeicher nicht geladen wird, ein Druckmittel in einen Kühlkreis (52) für die erste (11) und/oder die zweite (13) Kupplung gepumpt wird.

18. Verfahren nach einem der Ansprüche 15 bis 17,
**dadurch gekennzeichnet, dass** der Druckspeicher (24) geladen wird, wenn der Kühlstand des Druckspeichers (24) unter einen unteren Grenzwert fällt und die Beladung solange fortgesetzt wird, bis ein oberer Grenzwert erreicht ist.

19. Verfahren nach einem der Ansprüche 15 bis 18,
**dadurch gekennzeichnet, dass** wenigstens ein drosselndes Wegeventil (30, 32) mittels einer Steuereinheit (36) angesteuert wird.

20. Verfahren nach Anspruch 19,
**dadurch gekennzeichnet, dass** die Beladung des Druckspeichers (24) mittels der Steuereinheit (36) gesteuert wird.

21. Verfahren nach einem der Ansprüche 15 bis 20,
**dadurch gekennzeichnet, dass** der Schließgrad wenigstens einer Kupplung (11, 13) mittels eines Sensors (38, 40; 58, 60), vorzugsweise mittels eines Druck- (38, 40) oder Weglängensensors (58, 60) bestimmt wird.

22. Verfahren nach Anspruch 21,
**dadurch gekennzeichnet, dass** der Steuereinheit (36) Messdaten wenigstens eines Druck- (38, 40) oder Weglängensensors (58, 60) zugeführt werden.

23. Verfahren nach einem der Ansprüche 19 bis 22,
**dadurch gekennzeichnet, dass** der Steuereinheit (36) Messdaten von Fahrzustandssensoren (17a, 17b, 17c, 17d), insbesondere Schlupfsensoren (17a, 17b, 17c, 17d) an den Fahrzeugrädern (2a, 2b, 2c, 2d), zugeführt werden.

24. Verfahren nach den Ansprüche 22 und 23,
**dadurch gekennzeichnet, dass** mit der Steuereinheit (36) die Messdaten der Druck- (38, 40) oder Weglängensensoren (58, 60) sowie der Fahrzustandssensoren (17a, 17b, 17c, 17d) ausgewertet, die für eine Stabilisierung des Fahrzustandes erforderlichen Änderungen der Drehmomentverteilung zwischen den Achsen (5, 7) des Fahrzeugs (1) sowie die erforderlichen Änderungen des Schlupfes zwischen Abschnitten (9a, 9b) jeweils einer Achse (7) bestimmt und die erforderliche Änderungen durch entsprechende Ansteuerung der drosselnden Wegeventile (30, 32) vorgenommen werden.

25. Verfahren nach Anspruch 24,
**dadurch gekennzeichnet, dass** die zur Stabilisierung des Fahrzustandes erforderlichen Änderungen derart bestimmt werden und die entsprechende Ansteuerung der drosselnden Wegeventile (30, 32) so rechtzeitig vorgenommen wird, dass kein Schlupf zwischen Rädern (2a, 2b, 2c, 2d) des Fahrzeugs (1) und der Fahrbahn entsteht.
